# FASCICULE DE BREVET EUROPEEN

(11) **EP 2 487 984 B1**
(45) Date de publication et mention de la délivrance du brevet: **23.07.2014**
(21) Numéro de dépôt: 12154389.6
(22) Date de dépôt: 08.02.2012
(51) Int. Cl.: H04W 74/08, H04W 52/02, H04W 84/18

(54) **MÉTHODE DE COMMUNICATION ASYNCHRONE POUR RÉSEAU DE CAPTEURS SANS FIL**
Asynchrone Kommunikationsmethode für drahtloses Sensornetz
Asynchronous communication method for a wireless sensor network

(30) Priorité: 10.02.2011 FR 1151064
(43) Date de publication de la demande: 15.08.2012
(73) Titulaire: Commissariat à l'Énergie Atomique et aux Énergies Alternatives, 75015 Paris (FR)
(72) Inventeur: Corbellini, Giorgio, 38000 GRENOBLE (FR); Calvanese Strinati, Emilio, 38000 GRENOBLE (FR)
(74) Mandataire: Augarde, Eric

(56) Documents cités:
- WO-A1-2009/036786
- US-A1- 2007 207 750
- US-A1- 2009 103 437

## Description

### DOMAINE TECHNIQUE

La présente invention concerne de manière générale le domaine des réseaux de capteurs sans fil, encore dénommés WSNs (*Wireless Sensor Networks*), et plus particulièrement ceux opérant en mode asynchrone.

### ÉTAT DE LA TECHNIQUE ANTÉRIEURE

Les réseaux de capteur sans fil sont utilisés dans des applications les plus variées, notamment pour la surveillance de l'environnement, 1a surveillance de processus industriel, la surveillance domotique, la surveillance du trafic routier, l'agriculture de précision, la détection d'intrusions, etc.

De manière générale, un réseau de capteurs sans fil est un réseau ad *hoc* dont les noeuds sont constitués de capteurs capables de transmettre des mesures de manière autonome. Chaque capteur peut transmettre ses mesures de manière systématique, par exemple selon une périodicité déterminée ou, s'il est doté d'une intelligence locale, de manière sélective, par exemple sur détection d'une anomalie. Les données des mesures sont ensuite transmises sous forme de paquets à un noeud de collecte, encore appelé puits de données (data *sink)* qui centralise tout ou partie des mesures en question et, les traite, le cas échéant. Les paquets de données de mesure sont acheminés au noeud de collecte grâce à un routage multi-saut (*multi-hop*) au sein du réseau. Autrement dit, un noeud du réseau possède généralement à la fois une fonction de relais en sus d'une fonction de mesure.

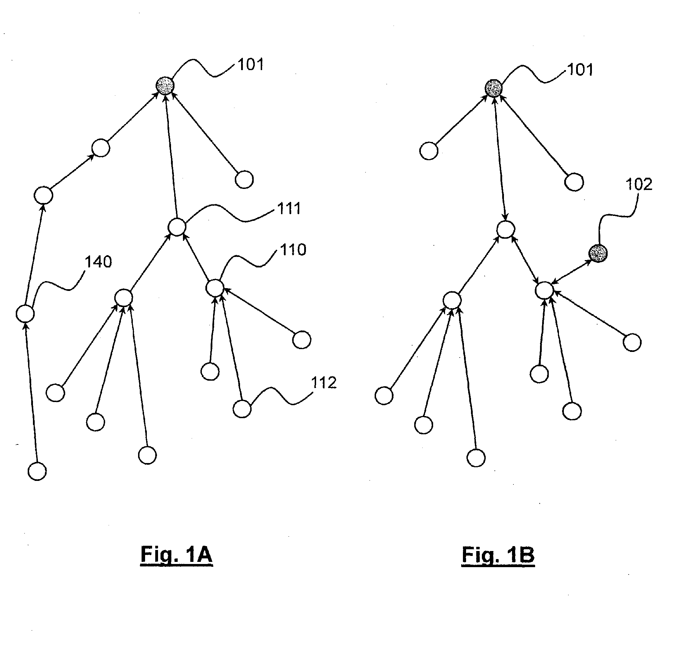

La Fig. 1A représente de manière schématique un réseau de capteurs sans fil comportant un seul noeud de collecte, 101. Les paquets de données de mesure sont acheminés, et plus précisément relayés, par les noeuds 110 et 111 jusqu'au noeud de collecte. On remarque que le réseau possède une structure arborescente, les feuilles de l'arbre, 112 ayant exclusivement une fonction de mesure et les noeuds 110, 111 pouvant cumuler une fonction de mesure et une fonction de relais. On comprendra qu'un paquet de données issu d'un noeud quelconque de l'arbre sera ainsi transmis de proche en proche jusqu'au noeud de collecte, à la racine de l'arbre. En dehors des feuilles et de la racine de l'arbre, chaque noeud, 110, possède un noeud-père, 111 , et un ou plusieurs noeuds-fils, 112. Ainsi, un noeud quelconque, 110, transmet à son noeud-père les paquets qu'il reçoit de ses noeuds-fils ainsi que ses propres paquets. Les noeuds fils d'un même noeud, dits noeuds frères, sont en compétition pour transmettre leurs paquets de données (données propres ou données relayées) à leur noeud-père.
Pour un noeud donné, nous désignerons par noeuds apparentés son noeud père, ses noeuds fils et ses noeuds frères. Les noeuds voisins d'un noeud donné, autres que ses noeuds apparentés, sont dénommés noeuds interférents, 140. Par noeud voisin d'un noeud donné, on entend tout noeud du réseau dont la puissance du signal reçu au niveau du noeud en question est supérieure à un seuil prédéterminé. En pratique, dans le cas d'un réseau homogène où les noeuds ont la même puissance de transmission, les voisins d'un noeud sont situés à l'intérieur d'un cercle centré sur ce noeud. La Fig. 1B représente de manière schématique un réseau de capteurs sans fil comportant une pluralité de noeuds de collecte. A chaque noeud de collecte peut être associé un sous-réseau du réseau de capteurs, de structure arborescente, dont la racine est le noeud de collecte en question.

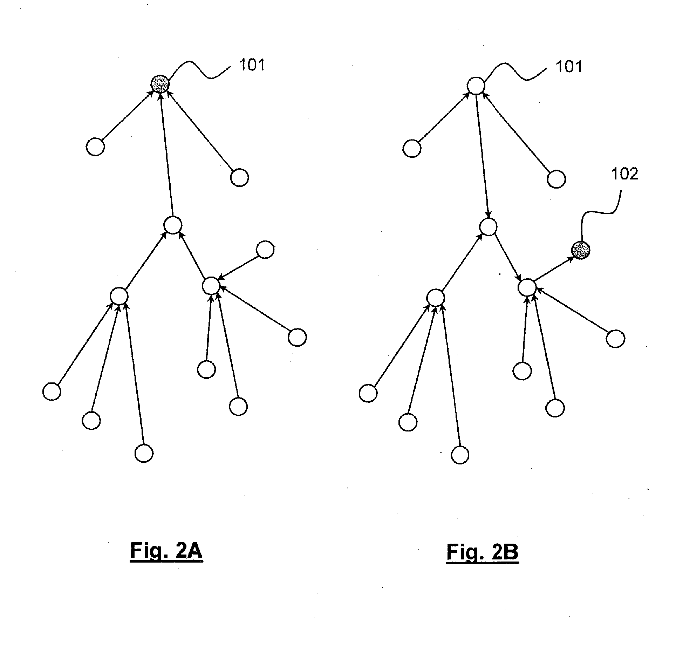

L'exemple illustré en Fig. 1B comprend deux noeuds de collecte, 101 et 102, respectivement associés aux sous-réseaux représentés en Figs. 2A et 2B. On comprend qu'un noeud du réseau pourra être le père d'un autre noeud dans un premier sous-réseau alors qu'il sera le fils de ce même autre noeud dans un second sous-réseau. Les relations de filiation entre deux noeuds sont donc relatives au noeud de collecte que l'on considère. En revanche, pour un noeud de collecte donné, tout noeud du sous-réseau associé à ce noeud de collecte, possède un noeud-père et un seul.

Les noeuds du réseau de capteur sont en général mobiles et les conditions de propagation d'un canal de transmission entre un noeud et son père peuvent par conséquent varier au cours du temps. Qui plus est, les relations de filiation entre les noeuds peuvent également évoluer en fonction des déplacements des différents noeuds.

On distingue les réseaux de capteurs sans fil de type homogène et de type hétérogène. Dans un réseau de type homogène, tous les capteurs possèdent les mêmes caractéristiques physiques, en particulier la même puissance de transmission, le même débit de transmission, etc. A l'inverse, dans un réseau de capteurs sans fil de type hétérogène, chaque capteur peut posséder des caractéristiques différentes, le cas échéant susceptibles de varier dans le temps. Par exemple, un capteur pourra transmettre des informations de surveillance à faible débit (long intervalle entre transmissions successives des données de mesure) et des informations d'alerte à haut débit (« burst » de messages d'alerte).

On distingue enfin les réseaux de capteur sans fil de type synchrone et de type asynchrone. Dans un réseau opérant en mode synchrone, les noeuds du réseau se partagent l'accès à une ressource de transmission selon division temporelle commune, c'est-à-dire pendant des intervalles temporels (TTI) connus de l'ensemble des noeuds du réseau. En revanche dans un réseau de type asynchrone, les différents noeuds ne sont pas synchronisés entre eux, souvent parce qu'une étape de synchronisation préalable est difficilement envisageable, voire impossible, entre noeuds mobiles. Il faut alors recourir à des protocoles de communication plus complexes, pour accéder de manière asynchrone à une ressource de transmission commune.
Les protocoles de communication permettant un accès à un canal de transmission, plus précisément à une ressource de transmission, dans un réseau de capteurs sans fil sont encore dénommés protocoles MAC *(MAC protocols)* en référence à la sous-couche MAC de la couche liaison dans un tel réseau.
Plusieurs types de protocoles MAC sont connus de l'état de la technique.
Le protocole B-MAC est un protocole d'accès asynchrone utilisant une technique d'échantillonnage de préambule *(Preamble Sampling)* issue du protocole LPL *(Low Poser Listening*)*.* On trouvera une description du protocole B-MAC dans l'article de J. Polastre et al. intitulé « Versatile low poser media access for wireless sensor networks » publié dans Proc. of the 2nd International Conference on Embedded networked sensor systems, Baltimore, USA, 2004, pp. 95-107. Dans le protocole B-MAC, chaque noeud du réseau de capteurs opère de manière asynchrone et passe périodiquement par des états successifs : réveil, écoute du canal, sommeil. L'intervalle entre deux réveils successifs est identique quel que soit le noeud et représente d'ailleurs la seule information partagée par l'ensemble des noeuds du réseau. Lorsqu'un premier noeud souhaite transmettre un paquet de données à un second noeud, le premier noeud transmet un préambule, de durée supérieure à l'intervalle entre deux réveils successifs (*wake-up period)* de manière à être certain que le second noeud puisse le détecter. Au terme du préambule, le premier noeud transmet immédiatement la charge utile (*payload*). Le second noeud ayant été averti par le préambule, reste à l'écoute du canal jusqu'à réception complète du paquet.
L'avantage du protocole B-MAC est de ne pas requérir de synchronisation préalable des noeuds du réseau. La transmission d'un long préambule peut cependant conduire à un grand temps de latence ainsi qu'à une consommation énergétique élevée, difficilement compatible avec une alimentation autonome des capteurs. En outre, lorsque le réseau est relativement dense, le risque de collision entre préambules de différents noeuds est important, ce qui réduit d'autant le débit effectif sur le réseau.

Une variante améliorée du protocole B-MAC, dénommée B-MAC+ a été proposée dans l'article de M. Avvenuti et al. intitulé « Increasing the efficiency of preamble sampling protocols for Wireless sensor networks » publié dans Mobile Computing and Wireless Communication International Conference, 2006, pp. 1-6*.* Dans cette variante, le préambule est divisé en plusieurs sections, chaque section comportant une indication de la taille de la partie du préambule restant à transmettre. Ainsi, lorsque le noeud destinataire détecte un préambule, il peut en déterminer le terme et se mettre en sommeil jusqu' à la réception de la charge utile du paquet. Bien que le protocole B-MAC+ permette de réduire la consommation d'énergie des noeuds, les temps de latence sont aussi importants que dans le protocole B-MAC. En outre, les risques de collision entre préambules sont toujours aussi importants.

Pour réduire à la fois le temps de latence et la consommation d'énergie, il a été proposé de remplacer le préambule long, destiné à réveiller le noeud destinataire, par un train de préambules courts dont la durée totale est celle du préambule long, chacun de ces préambules courts contenant l'adresse du noeud destinataire. Dès que le noeud destinataire détecte un préambule court, celui-ci renvoie au noeud émetteur un signal d'acquittement (*early ACK*). Sur réception du signal d'acquittement, le noeud émetteur cesse immédiatement d'envoyer les préambules courts et transmet la charge utile du paquet. Ce protocole connu sous le nom de X-MAC a été introduit par M. Buettner et al. dans l'article « X-MAC : a short preamble MAC protocol for duty-cycled wireless sensor networks » publié dans Proc. of the 4th International conference on Embedded sensor systems, 2006, pp. 307-320.

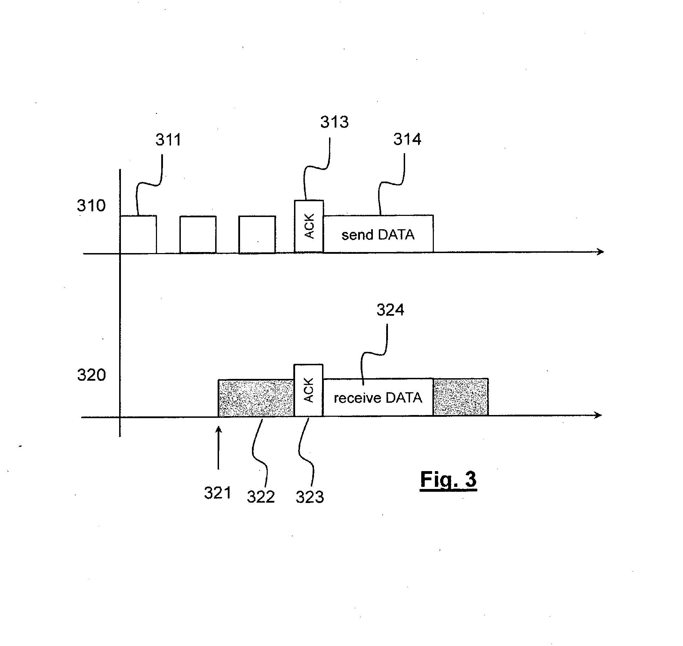

La Fig. 3 illustre un exemple de mise en oeuvre du protocole X-MAC dans un réseau de capteurs sans fil. On a représenté en 310 le chronogramme relatif à un premier noeud émetteur souhaitant transmettre un paquet de données à un noeud destinataire, et en 320 le chronogramme relatif à ce noeud destinataire. Le premier noeud émetteur transmet un train de préambules courts 311. En 321, le noeud destinataire s'éveille à un instant donné (son éveil est programmé à intervalles réguliers) et détecte un préambule court contenant son adresse en 322. Il renvoie aussitôt en 323 un acquittement de détection reçu par le premier noeud émetteur en 313. Ce dernier cesse alors de transmettre le train de préambules et envoie le paquet de données 314. Le paquet est reçu par le noeud destinataire en 324.
Si l'on suppose maintenant qu'un second noeud émetteur souhaite également transmettre un paquet de données au même destinataire (par exemple, les premier et second noeuds sont des noeuds-fils du noeud destinataire), il peut y avoir collision entre le train de préambules émis par ce second noeud avec les données émises par le premier noeud, étant donné que ces deux noeuds opèrent de manière asynchrone. Le noeud destinataire reçoit dans ce cas un paquet erroné.

L'objet de la présente invention est par conséquent de proposer une méthode de communication asynchrone dans un réseau de capteurs sans fil, réduisant le risque de collision entre paquets tout en garantissant une faible consommation énergétique des noeuds du réseau.

### EXPOSÉ DE L'INVENTION

La présente invention est définie par une méthode de communication asynchrone pour réseau de capteurs sans fil, le réseau comprenant en outre au moins une structure arborescente dont les noeuds sont constitués par lesdits capteurs et la racine est constituée par un noeud de collecte, chaque noeud étant adapté à recevoir des paquets de données de ses noeuds-fils et à en transmettre à son noeud-père au sein de ladite structure arborescente, la transmission d'un paquet par un noeud étant précédée par celle d'un préambule constitué par un train de préambules élémentaires, dit préambules courts, la communication de chaque noeud étant organisée selon une séquence de trames temporelles, chaque trame temporelle comprenant une phase d'écoute suivie le cas échéant d'une phase de réception et/ou une phase de transmission, dans laquelle ledit noeud:
- détermine pendant la phase d'écoute si un préambule lui est transmis par l'un de ses noeuds-fils et dans l'affirmative renvoie aussitôt à ce dernier un message d'acquittement spécifiant un instant de rendez-vous ;
- au terme de la phase d' écoute, si au moins un message d'acquittement a été envoyé, entre dans une phase de réception dans laquelle il diffuse, à l'instant de rendez-vous, un message d'allocation de fenêtres temporelles, puis reçoit, pendant chaque fenêtre temporelle, un paquet de données du noeud-fils auquel cette fenêtre a été allouée.

Avantageusement, si aucun message d'acquittement n'a été envoyé pendant la phase d'écoute, le noeud détermine si des paquets de données sont présents dans son buffer de transmission et :
- dans l'affirmative transmet à son noeud-père un préambule constitué d'un train de préambules courts ;
- dans la négative, se met en sommeil pour le reste de la trame temporelle.

De préférence, suite à la transmission de chaque préambule court, le noeud attend un message d'acquittement de son noeud-père et :
- s'il reçoit un tel message d'acquittement, cesse aussitôt la transmission du train de préambules courts, extrait de ce message d'acquittement une information temporelle indiquant un instant de rendez-vous puis se met en sommeil jusqu'à cet instant ;
- s'il ne reçoit pas de message d'acquittement au terme du train de préambules courts, se met en sommeil jusqu'à la fin de la trame temporelle.

Selon une variante avantageuse, à l'instant de rendez-vous, le noeud détecte un message d'allocation de fenêtre temporelle émis par son noeud-père, détermine si ce message contient sa propre adresse MAC et :
- dans l'affirmative, extrait une information de début et une information temporelle de fin de la fenêtre temporelle qui lui est allouée, se met en sommeil jusqu' au début de cette fenêtre et transmet au moins un paquet de données stocké dans son buffer de transmission pendant cette fenêtre ;
- dans la négative, se met en sommeil jusqu'à la fin de la trame temporelle.

Au terme de la fenêtre temporelle qui lui a été allouée, le noeud se met avantageusement en sommeil jusqu'à la fin de la trame temporelle.

Selon une variante de réalisation, au terme de la phase de réception, le noeud vérifie si son noeud-père est occupé et :
- dans la négative, lui transmet un train de préambules courts et attend un message d'acquittement de son noeud-père ;
- dans l'affirmative, se met en sommeil jusqu'à la fin de la trame temporelle.

Si le noeud reçoit un message d'acquittement, celui-ci :
- cesse la transmission du train de préambules courts, extrait de ce message d'acquittement une information temporelle indiquant un instant de rendez-vous puis se met en sommeil jusqu'à cet instant ;
- détecte, à l'instant de rendez-vous, un message d'allocation de fenêtres temporelles émis par son noeud-père, détermine si ce message contient sa propre adresse MAC et, dans l'affirmative, extrait une information de début et une information temporelle de fin de la fenêtre temporelle qui lui est allouée, se met en sommeil jusqu'au début de cette fenêtre et transmet à son noeud-père au moins un paquet de données qu'il a reçu de ses noeuds-fils pendant la phase de réception précédente.

Selon encore une variante de réalisation, l'allocation de fenêtres temporelles aux différents noeuds-fils est effectuée sur la base de degrés de priorité spécifiés dans les préambules respectivement émis par ses différents noeuds-fils.

Dans ce cas, le degré de priorité peut être exprimé en termes de type de classe de service, du caractère mobile ou non d' un noeud-fils, du nombre de paquets dans le buffer de transmission d'un noeud-fils ou encore de l'ancienneté du paquet le plus ancien dans ce buffer de transmission. L'information temporelle spécifiant l'instant de rendez-vous peut être une valeur de compteur à décrémenter avec une fréquence prédéterminée.
De même, l'information temporelle de début et l'information temporelle de fin de la fenêtre temporelle allouée au noeud peuvent être des valeurs de compteur à décrémenter avec une fréquence prédéterminée.
Avantageusement, lorsqu'un noeud détecte un message de son noeud-père pendant la phase d'écoute, il cesse toute transmission et se met en sommeil jusqu'à la fin de trame temporelle en cours.
De manière similaire, lorsqu'un premier noeud détecte, pendant la phase d'écoute, un préambule émis par un second noeud ayant le même noeud-père que le premier noeud, ledit premier noeud transmet lui-même un préambule, sans attendre la phase de transmission, pour autant que des paquets soient en attente dans son buffer de transmission.

Si un noeud détecte, pendant la phase d'écoute, un paquet, autre qu'un préambule, issu de l'un de ses noeuds-fils, il interrompt la phase d'écoute et, soit se met en sommeil jusqu' à la fin de la trame temporelle en cours, soit passe directement à la phase de transmission.

Si un noeud détecte, pendant une phase de transmission, un préambule de son noeud-père alors qu'il attend de ce même noeud un message d'acquittement, il se met en sommeil jusqu'à la fin de la trame temporelle en cours.
Si un premier noeud détecte, pendant une phase de transmission, un préambule émis par un second noeud ayant le même noeud-père que le premier noeud, ledit premier noeud décide d'interrompre la transmission de son préambule si son degré de priorité est inférieur à celui du préambule émis du second noeud et continue à transmettre son préambule dans le cas inverse.
Enfin, si un noeud détecte un préambule ou un message d'allocation de fenêtres temporelles, issu d'un noeuds-fils, pendant une phase de réception ou de transmission, il ne se met pas en sommeil et attend la transmission d'un paquet de ce noeud-fils.

### BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :
Les Figs. 1A et 1B représentent de manière schématique deux exemples de réseaux de capteurs sans fil ;
Les Figs. 2A et 2B représentent les sous-réseaux respectivement associés aux deux noeuds de collecte de la Fig. 1B ;
La Fig. 3 illustre un exemple de mise en oeuvre du protocole X-MAC dans un réseau de capteurs sans fil ;
La Fig. 4 représente un diagramme d'états simplifié d'un noeud du réseau mettant en oeuvre la méthode de communication selon un mode de réalisation de l'invention ;
La Fig. 5 représente la trame temporelle de la méthode de communication selon un mode de réalisation de l'invention ;
La Fig. 6 représente l'organigramme d'une phase d'écoute du canal selon un mode de réalisation de l'invention ;
Les Figs. 7A et 7B représentent respectivement le format d'un préambule et le format d'un message d'acquittement ;
La Fig. 8 représente l'organigramme d'une phase de réception selon un mode de réalisation de l'invention ;
La Fig. 9 représente le format d'un message d'allocation de fenêtres temporelles ;
La Fig. 10 représente l'organigramme d'une phase de transmission selon un mode de réalisation de l'invention ;
La Fig. 11 représente l'organigramme d'une phase de transmission optionnelle selon une variante de réalisation de l'invention.

### EXPOSÉ DÉTAILLÉ DE MODES DE RÉALISATION PARTICULIERS

Nous considérons à nouveau dans la suite un réseau de capteurs sans fil comportant au moins un puits de données (data *sink),* dit aussi noeud de collecte. Les capteurs et les puits de données sont identifiés à des noeuds du réseau.
Sans perte de généralité nous supposerons que le réseau est de type de mono-puits, c'est-à-dire qu'il est organisé selon une structure arborescente avec un noeud de collecte à la racine de l'arbre. Si le réseau comporte une pluralité de puits de données, il peut être décomposé en plusieurs sous-réseaux respectivement associés aux différents puits, chaque sous-réseau ayant une structure arborescente. La méthode de communication selon l'invention opère alors sur chacun des sous-réseaux en parallèle.

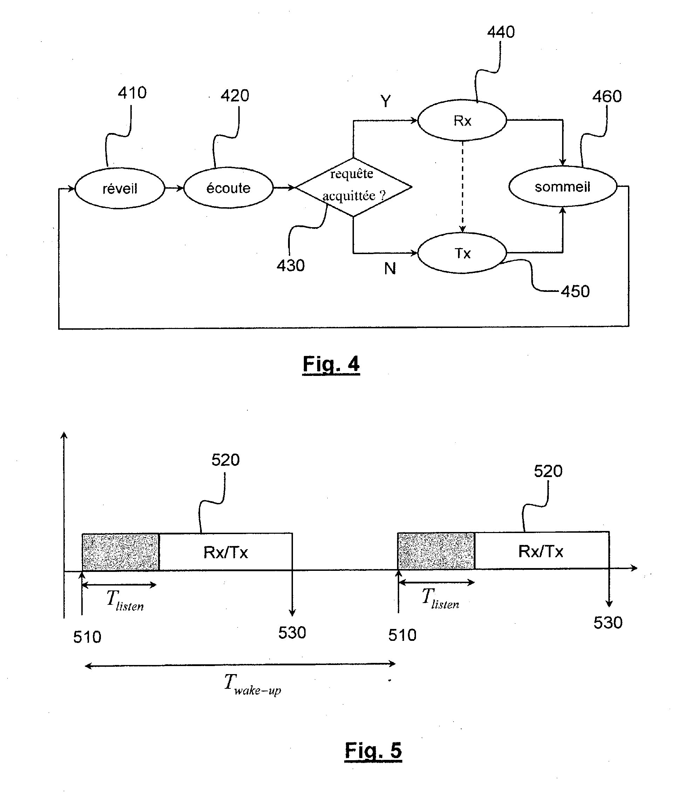

La Fig. 4 donne un diagramme d'états simplifié d'un noeud du réseau utilisant la méthode de communication selon un mode de réalisation de l'invention.
Nous considérerons ici un noeud générique du réseau, autrement dit un noeud qui n'est situé ni à la racine (noeud de collecte) ni en une feuille de l'arbre.
Chaque noeud du réseau passe cycliquement par une séquence d'états, certains états pouvant être optionnels (représentés en trait discontinu) et d'autres obligatoires (représentés en trait continu).
Chaque noeud du réseau s'éveille à intervalles réguliers, la phase de réveil étant représentée par l'état 410. En pratique, le passage à l'état 410 se traduit par l'activation du récepteur radio au sein du noeud.
Le noeud passe ensuite dans un état d'écoute 420 du canal pendant une durée prédéterminée. Par écoute du canal, on entend que le récepteur reçoit et analyse les signaux du canal de transmission. Le canal de transmission est à prendre ici dans son acception générale : il englobe aussi bien le canal de transmission entre le noeud en question et son noeud-père que le(s) canal (canaux) de transmission entre ce même noeud et son (ses) noeud (s)-fils, le récepteur ne pouvant a *priori* distinguer ces différents canaux à l'aide de différentes ressources de transmission.
Au terme de la phase d'écoute, le noeud peut passer soit à une phase de réception, 440, s'il a préalablement acquitté une requête de transmission, encore dénommée ci-après requête d'allocation, soit à une étape de transmission, 450, dans la mesure où il a lui-même des paquets de données à transmettre (paquets de données propres et/ou paquets de données à relayer). Plus précisément, au terme de la phase d'écoute 420, le noeud vérifie en 430 s'il a acquitté une requête de transmission d'au moins l'un de ses noeuds-fils. Dans l'affirmative, il passe à l'étape 440 et, dans la négative, il passe à l'étape 450.
Selon une variante envisagée plus loin, le noeud peut passer dans certaines conditions à la phase de transmission 450 au terme de la phase de réception 440.
Dans tous les cas, le noeud se met ensuite en sommeil en 460 avant de s'éveiller à nouveau au début de la trame temporelle suivante en 410.

La Fig. 5 représente une trame temporelle de base utilisée par la méthode de communication selon l'invention. Cette trame se répète selon une période *T_{wake-up'}* identique pour tous les noeuds du réseau. Les séquences de trames sont toutefois décalées arbitrairement d'un noeud à l'autre (noeuds asynchrones).
La trame temporelle débute par un éveil du noeud 510, aussitôt suivi d'une phase d'écoute 520 de durée *Tₗᵢₛₜᵢₑₙ.* Si le noeud a acquitté des requêtes de transmission pendant la phase d'écoute, il passe à une phase de réception. Le noeud initie la réception en transmettant un message d'ordonnancement à ses noeuds-fils comme nous le verrons plus loin. En absence d'acquittement, si le noeud a lui-même des paquets à transmettre (propres ou relayés) à son noeud-père, la phase d'écoute est suivie d'une phase de transmission.
La phase de réception/transmission est désignée par 520. Au terme de la phase 520, le noeud se met en sommeil en 530.

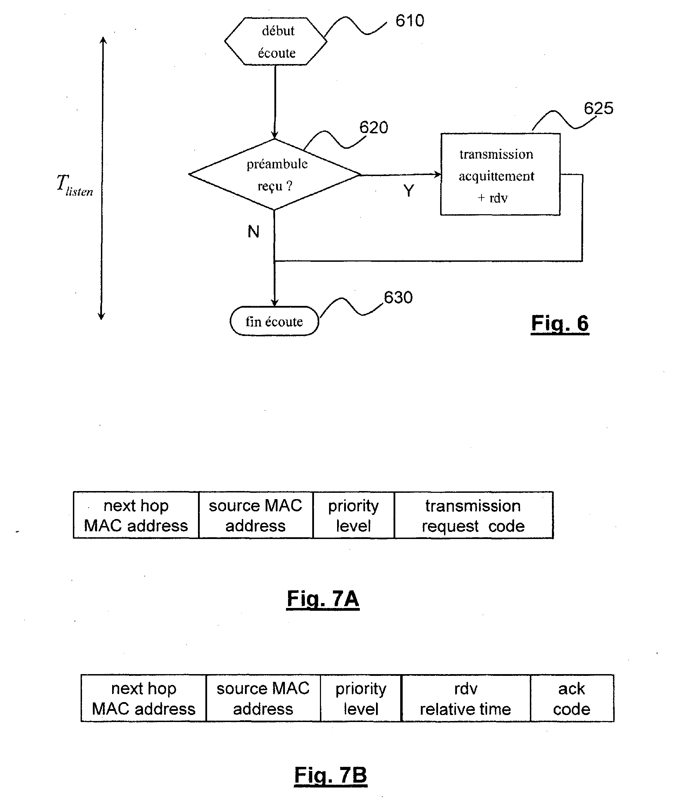

La Fig. 6 représente de manière plus détaillée l'organigramme de la phase d' écoute de la Fig. 5.
Le noeud commence à écouter le canal de transmission à l'étape 610, autrement dit le récepteur du noeud détecte les messages reçus sur ce canal.
Pendant toute la période d'écoute, le noeud vérifie en 620 s'il reçoit un préambule qui lui est destiné. Comme dans le protocole X-MAC précité, ce préambule est en fait constitué par un train de préambules courts. Lorsqu'un noeud souhaite transmettre un paquet de données à son noeud-père, il lui transmet préalablement un tel préambule pour requérir l'allocation d'une fenêtre temporelle d' émission. Chacun des préambules courts comprenant l'adresse du noeud destinataire du paquet (par exemple son adresse MAC), le noeud peut déterminer si le préambule et, par conséquent, le paquet qui lui fait suite, lui est effectivement adressé.
Dès lors que le noeud reçoit un préambule court qui lui est destiné, celui-ci renvoie en 625 un message d'acquittement au noeud-fils qui le lui a transmis. Le message d'acquittement contient une information temporelle indiquant un instant de «rendez-vous », explicité plus loin.
Il convient de noter que, pendant la période d'écoute, le noeud en question peut recevoir des préambules provenant de ses différents noeuds-fils et donc transmettre plusieurs messages d'acquittement à leur intention. Toutefois, l'instant de rendez-vous est le même pour tous ses noeuds-fils.
L'envoi d' un message d'acquittement signifie simplement que la requête d'allocation a bien été prise en compte par le noeud l'ayant reçue. Le noeud-fils destinataire du message d'acquittement cesse alors de transmettre son préambule, c'est-à-dire interrompt la transmission des préambules courts.
En tout état de cause, la phase d'écoute se termine en 630 au bout du temps *Tₗᵢₛₜₑₙ.*

La Fig. 7A représente un exemple de format d'un préambule court, tel que reçu à l'étape 620.
Le préambule court comprend l'adresse MAC du noeud destinataire (*Next hop MAC address*)*,* l'adresse MAC du noeud source (*Source MAC address*) transmettant le préambule, ainsi qu'un code spécifiant une requête en allocation de fenêtre temporelle (*Transmission request* code).
Le préambule court peut en outre comprendre d'autres informations, telles qu'une indication donnant la classe de service du paquet, le nombre de paquets restant à transmettre par le noeud source, autrement dit le nombre de paquets stocké dans le buffer de l'émetteur, le temps d'attente du paquet le plus ancien dans le buffer, etc. De manière générale, ces informations représentent un degré de priorité du paquet (*priority level)* et permettent d'effectuer l'allocation de fenêtres temporelles, comme décrit plus loin.

La Fig. 7B représente un exemple de format d'un message d'acquittement tel que transmis à l'étape 625.
Le message d'acquittement comprend l'adresse MAC du noeud destinataire du message d'acquittement (*Next hop MAC address*), c'est-à-dire l'adresse MAC du noeud ayant transmis le préambule, l'adresse du noeud source du message d'acquittement (*source MAC adress*)*,* c' est-à-dire l' adresses MAC du noeud ayant reçu le préambule, un code spécifiant un acquittement (*ack code*), le cas échéant une indication de degré de priorité (*priority level*) et une information temporelle spécifiant un instant de rendez-vous (*rdv relative time*) .
Les noeuds étant asynchrones, l'information temporelle est fournie sous forme relative, par exemple comme une valeur de compteur à décrémenter avec une fréquence d'horloge prédéterminée. Le noeud recevant le message d'acquittement charge un compteur avec la valeur en question. L'instant de rendez-vous coïncide avec le passage à zéro du compteur.

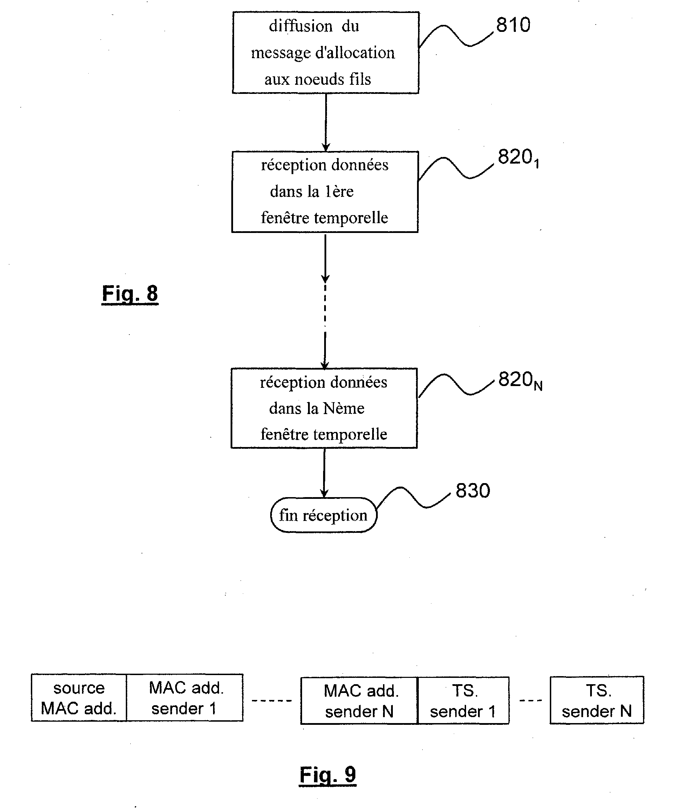

La Fig. 8 représente de manière plus détaillée l'organigramme de la phase de réception de la Fig. 5.
Cette phase de réception permet à un noeud de recevoir des paquets de données de ses noeuds-fils, plus précisément de ceux auxquels il a transmis préalablement un message d'acquittement dans la phase d'écoute précédente (Fig. 6, 625), voire dans la phase d'écoute d'une trame temporelle précédente.
A l'instant du rendez-vous fixé lors de la phase d'écoute, le noeud diffuse en 810 un message d'allocation de fenêtres temporelles à l'ensemble de ses noeuds-fils. Ce message indique à chacun des noeuds-fils ayant reçu un message d'acquittement, la fenêtre temporelle pendant laquelle il sera autorisé à transmettre son paquet de données.
La stratégie d'allocation des fenêtres temporelles sera présentée ultérieurement en relation avec la Fig. 9.
De manière générale, chaque fenêtre temporelle est définie de manière relative par une information temporelle de début et une information temporelle de fin. Ces informations temporelles sont avantageusement des valeurs de compteur. Le noeud auquel la fenêtre est allouée, dit noeud allocataire, décrément avec une fréquence prédéterminée ces valeurs. Avantageusement, l'information temporelle de début est une valeur nulle, et la valeur de fin d'une fenêtre est identique à la valeur de début de la fenêtre suivante. De cette manière, le noeud allocataire de la première fenêtre temporelle commence à transmettre dès la réception du message d'allocation (c'est-à-dire dès l'instant du rendez-vous) et les noeuds allocataires des fenêtres suivantes transmettent les uns après les autres sans interruption.
Le noeud écoute le canal pendant chacune des fenêtres temporelles et récupère les paquets de données transmis par ses fils en 820₁ à 820_{N}.
La phase de réception se termine en 830 et le noeud se met ensuite en sommeil. Selon une variante optionnelle de réalisation décrite plus loin, le noeud tente de transmettre immédiatement à son père les paquets qu'il vient de recevoir de ses fils.

La Fig. 9 représente un exemple de format de message d'allocation de fenêtres temporelles.
Le message d'allocation comprend l'adresse MAC du noeud émetteur du message (*Source* MAC *address*)*,* les adresses MAC des noeuds-fils auxquels sont allouées les fenêtres temporelles (*MAC address sender 1,.., MAC address sender N*) ainsi que les valeurs de fin respectives de ces fenêtres (*TS sender 1,.., TS Sender N*) . Ainsi, le premier allocataire transmet ses données dès qu'il reçoit le message d'allocation et jusqu'au temps indiqué par *TS1,* le second allocataire transmet ensuite ses données de *TS1* à *TS2,* et ainsi de suite jusqu'à *TSN.*
L'allocation des fenêtres temporelles est effectuée selon une stratégie dépendant du type d'application.
Dans certains cas, le réseau peut supporter plusieurs types de trafic correspondant à différentes classes de service. Par exemple, un capteur peut avoir à transmettre des données de surveillance avec un faible degré d'urgence ou de priorité mais aussi des données d'alerte avec un haut degré de priorité. Le degré de priorité du paquet peut être spécifié dans le préambule (*Preamble type*) lors de la demande d'allocation. Ce degré de priorité pourra indiquer ou dépendre de la classe de service du paquet, du nombre de paquets en attente dans le buffer de transmission, de l'ancienneté du paquet le plus ancien dans le buffer, du caractère mobile ou non du noeud, etc.
L'allocation des fenêtres temporelles se fait selon le degré de priorité demandé. Ainsi, un paquet urgent pourra se voir allouer la première fenêtre temporelle, alors qu'un paquet non urgent ne se sera servi que dans la mesure où il reste une fenêtre disponible (*Best effort*)*.* En effet, la durée de la phase de réception étant bornée par *T_{wake-up} -Tₗᵢₛₜₑₙ,* un noeuds-fil pourra ne pas être servi, alors même que sa requête d'allocation a été acquittée en début de trame, pendant la phase d'écoute. Il devra attendre dans ce cas une trame ultérieure pour recevoir un message d'allocation contenant son adresse MAC.
Pour un même degré de priorité, l'allocation de fenêtre temporelle pourra être effectuée selon une règle premier arrivé -- premier servi. Alternativement, cette allocation sera avantageusement effectuée en fonction d'urne information contenue dans le préambule, telle que l'ancienneté du paquet le plus ancien dans le buffer du noeud-fils ou bien le nombre de paquets en attente de transmission dans ce buffer.

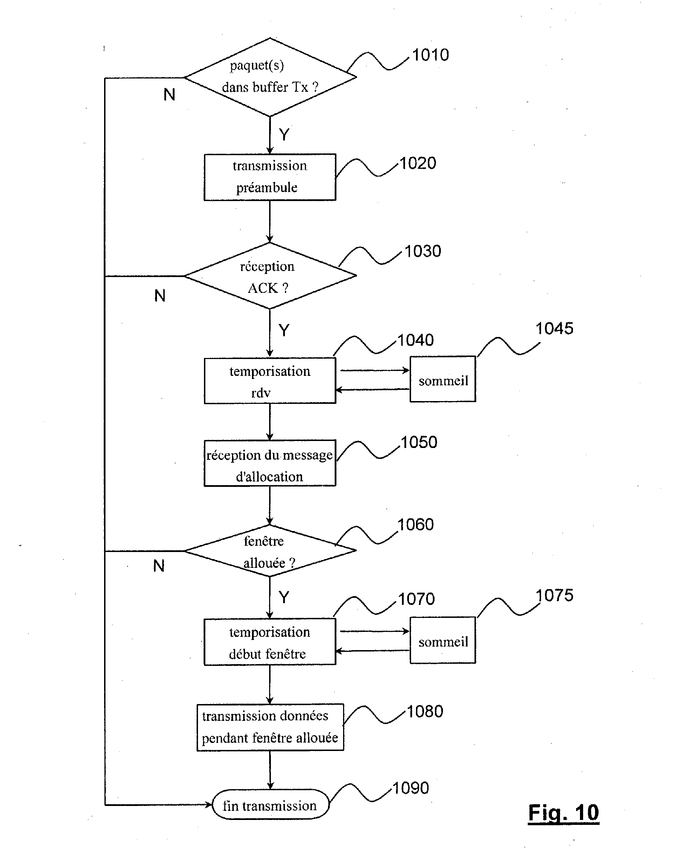

La Fig. 10 représente schématiquement l'organigramme de la phase de transmission de la Fig. 5.
On rappelle que le noeud entre dans cette phase s' il n' a pas acquitté de requête d'allocation lors de la phase d'écoute précédente.
Le noeud vérifie en 1010 l'état de son buffer de transmission. Si le buffer ne contient aucun paquet à transmettre, la phase de transmission se termine aussitôt en 1090.

Si le buffer contient au moins un paquet à transmettre, le noeud transmet en 1020 un train de préambules courts à son noeud-père. La durée maximale de ce train de préambules est égale à la plus longue période de sommeil d'un noeud (*T_{wake-up}*). Ainsi, son noeud-père peut détecter son préambule de manière certaine. Le format des préambules courts est donné par la Fig. 7A.
Après l'envoi d'un préambule court, le noeud vérifie en 1030 s'il a reçu un message d'acquittement. Le format du message d'acquittement est donné en Fig. 7B.
Si le noeud n' a toujours pas reçu de message d'acquittement à la fin de son train de préambules, il termine la phase de transmission en 1090.
En revanche, s' il reçoit un message d'acquittement de son noeud-père, il en extrait aussitôt l'information temporelle donnant l'instant de rendez-vous et charge un compteur avec cette information à l'étape 1040. Autrement dit, le noeud arme un temporisateur avec une durée correspondant à l'information temporelle ainsi extraite puis se met en sommeil en 1045.
Lorsque le temporisateur arrive à échéance, le noeud s'éveille et reçoit le message d'allocation de fenêtres temporelles en 1050.
Le noeud analyse le message en question et détermine en 1060 si une fenêtre temporelle lui a été allouée, c'est-à-dire si le message contient son adresse MAC. Dans la négative, la phase de transmission se termine en 1090. Dans l'affirmative, le noeud extrait en 1070 les informations temporelles (*TSₙ₋₁,TSₙ*) donnant respectivement le début et la fin de la fenêtre qui lui a été allouée. Ces valeurs sont chargées dans des compteurs et décrémentées avec une fréquence prédéterminée.
Le noeud peut attendre le début de la fenêtre en restant en état d'éveil. Alternativement, tout comme pour le message d'allocation, il peut se mettre en sommeil en 1075 jusqu'à l'arrivée de l'échéance.
En tout état de cause, le noeud transmet son ou ses paquet(s) de données en 1080 pendant la fenêtre temporelle qui lui a été allouée.
La phase de transmission se termine en 1090 et le noeud se met alors en sommeil.

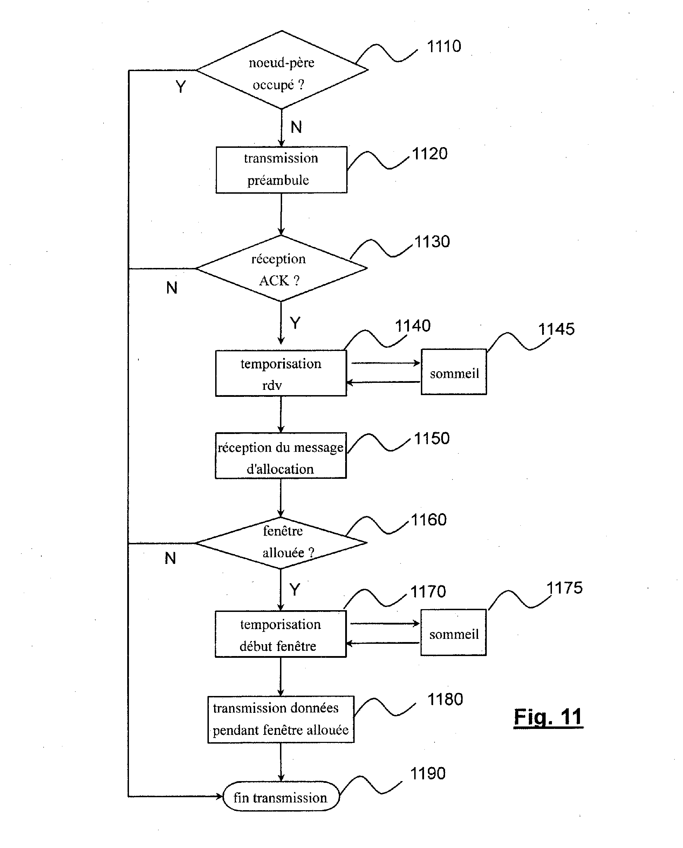

La Fig. 11 représente une phase de transmission optionnelle, mise en oeuvre dans une variante de réalisation de l'invention.
Cette phase de transmission optionnelle intervient après la phase de réception décrite en relation avec la Fig. 7. Plus précisément lorsque cette phase est terminée (730), le noeud ne retourne pas immédiatement à l'état de sommeil mais tente de transmettre à son père les paquets qu'il vient de recevoir de ses fils pendant la trame temporelle en cours.
Le noeud écoute le canal et vérifie en 1110 si son noeud-père est occupé. Pour ce faire, il détermine si son noeud-père transmet des messages sur le canal, en discriminant les adresses MAC source de ces messages.
Dans l'affirmative, la phase de transmission optionnelle s'achève aussitôt en 1190. Dans la négative, le noeud transmet un train de préambules courts en 1120. Les étapes 1120 à 1190 sont identiques aux étapes 1020 à 1090 précédemment décrites.
Cette phase optionnelle de transmission représente un raccourci. Elle permet en effet au noeud de ne pas attendre la trame temporelle suivante pour requérir une allocation de fenêtre temporelle, et, en cas de succès, de retransmettre les paquets qu'il vient de recevoir pendant la phase de réception.

La méthode de communication selon l'invention permet de minimiser les risques de collision entre paquets. Tout d'abord la transmission d'un préambule est interrompue dès que la requête d'allocation est acquittée. Ensuite, la programmation d'un rendez-vous temporel entre un noeud et ses fils ainsi que la diffusion d'un message d'allocation unique réduit considérablement le temps d'utilisation du canal. Enfin, la compétition entre noeuds-fils est résolue par le mécanisme d'allocation de fenêtres temporelles distinctes.
En réduisant les risques de collision et par conséquent la probabilité de retransmission d'un paquet, la méthode de communication selon l'invention permet de réduire la consommation d'énergie des noeuds du réseau.
En outre, la programmation de la diffusion du message d'allocation à un instant de rendez-vous ainsi que celle des fenêtres temporelles de transmission permet aux noeuds de minimiser leur activité de transmission/réception au cours d'une trame temporelle et par conséquent Leur consommation d'énergie.
Lors des différentes phases (écoute, réception, transmission) de la méthode de communication exposée plus haut, un noeud du réseau doit analyser certains messages spécifiques qu'il reçoit sur le canal de transmission. Par exemple, un noeud sera en attente d'un préambule pendant la phase d'écoute, de paquets de données pendant la phase de réception, d'un message d'allocation dans la phase de transmission. Le noeud en question peut discriminer les paquets correspondants et rejeter ceux qui ne lui sont pas destinés. Selon une variante, le noeud ne rejette pas mais détecte au contraire les paquets qui sont destinés à d'autres noeuds. Nous envisagerons d'abord la phase d'écoute puis les phases de réception/transmission.
Lorsqu'un noeud détecte un paquet issu de son noeud-pègre pendant la phase d'écoute, par exemple un préambule transmis par ce dernier, il en déduit que celui-ci est occupé. Il peut alors décider d'inhiber toute phase de transmission (y compris la phase de transmission optionnelle) pendant la trame temporelle en cours, de manière à prévenir une collision de paquets au niveau du noeud-père. Il pourra cependant effectuer la phase de réception normalement et collecter les paquets de ses noeuds-fils.
Lorsque, pendant sa phase d'écoute, un noeud détecte un préambule émis par un noeud-frère (au sens défini dans la partie introductive) et le message d'acquittement subséquent de leur noeud-père commun, il en déduit que le noeud-père est lui-même en phase d'écoute. S'il a des paquets à transmettre, il peut alors en tirer parti en lui transmettant immédiatement un préambule de manière opportuniste, sans attendre la phase de transmission subséquente.
Lorsque, pendant sa phase d'écoute, un noeud reçoit un paquet d'un de ses noeuds-fils, autre qu'un préambule, par exemple un message d'allocation émis par un noeuds-fils à l'intention de ses propres fils, il peut décider de passer à l'état de sommeil pour le reste de la trame temporelle, de manière là encore à prévenir les risques de collision. Alternativement, il peut interrompe la phase d'écoute et aller directement à la phase de transmission.
Lorsqu'un noeud détecte un paquet d'un noeud interfèrent (au sens défini dans la partie introductive) pendant la phase d'écoute, il peut, comme précédemment, décider de passer à l'état de sommeil pour le reste de la trame temporelle. Toutefois, si ce choix permet de faire l'économie d'une consommation d'énergie pouvant être inutile (collision), il entraîne une augmentation de la latence dans le réseau (phase de transmission reportée à la trame suivante).

En ce qui concerne maintenant la phase de transmission, si un noeud détecte un préambule de son noeud-père alors qu'il attend ce même noeud un message d'acquittement (parce qu'il lui transmet un train de préambules courts), il en déduit que ce dernier n' est pas en phase d'écoute et se met en sommeil pour le reste de la trame temporelle.
Si un noeud détecte un préambule d'un noeud-frère alors qu'il attend de son noeud-père un message d'acquittement, le noeud doit arbitrer entre le préambule de son frère et son propre préambule. Si le degré de priorité indiqué dans le préambule de son frère est supérieur à celui indiqué dans le sien, il cesse sa transmission. A l'inverse, il poursuit la transmission des préambules courts, en escomptant que son noeud-frère cesse sa transmission.
Si le noeud détecte un message d'allocation émis par un noeud-frère alors qu'il attend un message d'acquittement de son noeud père, il cesse immédiatement toute transmission jusqu'à la fin de la trame temporelle.
Si un noeud détecte un préambule ou un message d'allocation de l'un des ses noeuds-fils, alors qu'il est en phase de réception ou de transmission, ce préambule ou ce message sera purement et simplement ignoré. Toutefois, lorsqu'il s'agit d'un message d'allocation, le noeud en déduit que son fils risque de passer bientôt en phase de transmission. Si le noeud a déjà entrepris sa phase de réception et s'il s'apprêtait à retourner à l' état de sommeil, il peut décider, dans ce cas, de rester éveillé.
Si un noeud détecte un paquet d'un noeud interférent pendant une phase de réception ou de transmission, il peut décider dans certaines circonstances, notamment si le niveau du signal interférent est supérieur à une valeur de seuil, de cesser sa réception ou sa transmission pendant le reste de la trame temporelle.

L' homme du métier comprendra que selon le type de message détecté et la phase dans laquelle se trouve le noeud, d'autres stratégies pourront être mises en oeuvre sans pour autant sortir du cadre de la présente invention.

## Revendications

1. Méthode de communication asynchrone pour réseau de capteurs sans fil, le réseau comprenant en outre au moins une structure arborescente dont les noeuds sont constitués par lesdits capteurs et la racine (101) est constituée par un noeud de collecte, chaque noeud étant adapté à recevoir des paquets de données de ses noeuds-fils et à en transmettre à son noeud-père au sein de ladite structure arborescente, la transmission d'un paquet par un noeud étant précédée par celle d'un préambule constitué par un train de préambules élémentaires, dit préambules courts, la communication de chaque noeud étant organisée selon une séquence de trames temporelles, chaque trame temporelle comprenant une phase d'écoute (420) suivie le cas échéant d'une phase de réception (440) et/ou une phase de transmission (450), **caractérisée en ce que** ledit noeud:
- détermine (620) pendant la phase d'écoute si un préambule lui est transmis par l'un de ses noeuds-fils et dans l'affirmative renvoie (625) aussitôt à ce dernier un message d'acquittement spécifiant une information temporelle sous forme relative, dite instant de rendez-vous ;
- au terme de la phase d'écoute, si au moins un message d'acquittement a été envoyé, entre dans une phase de réception (440) dans laquelle il diffuse (810), au dit instant de rendez-vous, un message d'allocation de fenêtres temporelles, chaque information temporelle étant définie de manière relative par une information temporelle de début et une information temporelle de fin, puis reçoit (820₁,..820_{N}), pendant chaque fenêtre temporelle, un paquet de données du noeud-fils auquel cette fenêtre a été allouée.

2. Méthode de communication selon la revendication 1, **caractérisée en ce que**, si aucun message d'acquittement n'a été envoyé pendant la phase d'écoute, le noeud détermine si des paquets de données sont présents dans son buffer de transmission et :
- dans l'affirmative transmet à son noeud-père un préambule constitué d'un train de préambules courts ;
- dans la négative, se met en sommeil pour le reste de la trame temporelle.

3. Méthode de communication selon la revendication 2, **caractérisée en ce que**, suite à la transmission de chaque préambule court, le noeud attend un message d'acquittement de son noeud-père et :
- s'il reçoit un tel message d'acquittement, cesse aussitôt la transmission du train de préambules courts, extrait de ce message d'acquittement une information temporelle indiquant un instant de rendez-vous puis se met en sommeil jusqu'à cet instant ;
- s'il ne reçoit pas de message d'acquittement au terme du train de préambules courts, se met en sommeil jusqu'à la fin de la trame temporelle.

4. Méthode de communication selon la revendication 3, **caractérisée en ce qu'**à l'instant de rendez-vous, le noeud détecte un message d'allocation de fenêtre temporelle émis par son noeud-père, détermine si ce message contient sa propre adresse MAC et :
- dans l'affirmative, extrait ladite information de début et une information temporelle de fin de la fenêtre temporelle qui lui est allouée, se met en sommeil jusqu'au début de cette fenêtre et transmet au moins un paquet de données stocké dans son buffer de transmission pendant cette fenêtre ;
- dans la négative, se met en sommeil jusqu'à la fin de la trame temporelle.

5. Méthode de communication selon la revendication 4, **caractérisée en ce que**, au terme de la fenêtre temporelle qui lui a été allouée, le noeud se met en sommeil jusqu'à la fin de la trame temporelle.

6. Méthode de communication selon la revendication 1, **caractérisée en ce qu'**au terme de la phase de réception, le noeud vérifie si son noeud-père est occupé en détectant s'il a reçu un paquet issu de son noeud-père pendant la phase d'écoute et :
- dans la négative, lui transmet un train de préambules courts et attend un message d'acquittement de son noeud-père ;
- dans l'affirmative, se met en sommeil jusqu'à la fin de la trame temporelle.

7. Méthode de communication selon la revendication 6, **caractérisée en ce que** si le noeud reçoit un message d'acquittement, celui-ci :
- cesse la transmission du train de préambules courts, extrait de ce message d'acquittement une information temporelle indiquant l'instant de rendez-vous puis se met en sommeil jusqu'à cet instant ;
- détecte, à l'instant de rendez-vous, un message d'allocation de fenêtres temporelles émis par son noeud-père, détermine si ce message contient sa propre adresse MAC et, dans l'affirmative, extrait l'information de début et l'information temporelle de fin de la fenêtre temporelle qui lui est allouée, se met en sommeil jusqu'au début de cette fenêtre et transmet à son noeud-père au moins un paquet de données qu'il a reçu de ses noeuds-fils pendant la phase de réception précédente.

8. Méthode de communication selon la revendication 1, **caractérisée en ce que** l'allocation de fenêtres temporelles aux différents noeuds-fils est effectuée sur la base de degrés de priorité spécifiés dans les préambules respectivement émis par ses différents noeuds-fils.

9. Méthode de communication selon la revendication 8, **caractérisée en ce que** le degré de priorité est exprimé en termes de type de classe de service, du caractère mobile ou non d'un noeud-fils, du nombre de paquets dans le buffer de transmission d'un noeud-fils ou encore de l'ancienneté du paquet le plus ancien dans ce buffer de transmission.

10. Méthode de communication selon la revendication 3, **caractérisée en ce que** l'information temporelle spécifiant l'instant de rendez-vous est une valeur de compteur à décrémenter avec une fréquence prédéterminée.

11. Méthode de communication selon la revendication 4, **caractérisée en ce que** l'information temporelle de début et l'information temporelle de fin de la fenêtre temporelle allouée au noeud sont des valeurs de compteur à décrémenter avec une fréquence prédéterminée.

12. Méthode de communication selon l'une des revendications 1 à 11, **caractérisée en ce que**, lorsqu'un noeud détecte un message de son noeud-père pendant la phase d'écoute, il cesse toute transmission et se met en sommeil jusqu'à la fin de trame temporelle en cours.

13. Méthode de communication selon l'une des revendications 1 à 11, **caractérisée en ce que**, lorsqu'un premier noeud détecte, pendant la phase d'écoute, un préambule émis par un second noeud ayant le même noeud-père que le premier noeud, ledit premier noeud transmet lui-même un préambule, sans attendre la phase de transmission, pour autant que des paquets soient en attente dans son buffer de transmission.

14. Méthode de communication selon l'une des revendications 1 à 11, **caractérisée en ce que**, lorsqu'un noeud détecte, pendant la phase d'écoute, un paquet, autre qu'un préambule, issu de l'un de ses noeuds-fils, il interrompt la phase d'écoute et, soit se met en sommeil jusqu'à la fin de la trame temporelle en cours, soit passe directement à la phase de transmission.

15. Méthode de communication selon l'une des revendications 1 à 11, **caractérisée en ce que**, si un noeud détecte, pendant une phase de transmission, un préambule de son noeud-père alors qu'il attend de ce même noeud un message d'acquittement, il se met en sommeil jusqu'à la fin de la trame temporelle en cours.

16. Méthode de communication selon l'une des revendications 1 à 11, **caractérisée en ce que**, si un premier noeud détecte, pendant une phase de transmission, un préambule émis par un second noeud ayant le même noeud-père que le premier noeud, ledit premier noeud décide d'interrompre la transmission de son préambule si son degré de priorité est inférieur à celui du préambule émis du second noeud et continue à transmettre son préambule dans le cas inverse.

17. Méthode de communication selon l'une des revendications 1 à 11, **caractérisée en ce que**, si un noeud détecte un préambule ou un message d'allocation de fenêtres temporelles, issu d'un noeuds-fils, pendant une phase de réception ou de transmission, il ne se met pas en sommeil et attend la transmission d'un paquet de ce noeud-fils.

## Patentansprüche

1. Verfahren zur asynchronen Kommunikation für ein drahtloses Sensornetz, wobei das Netz ferner wenigstens eine baumartige Struktur umfasst, deren Knoten durch die Sensoren gebildet sind, und deren Wurzel (101) durch einen Sammelknoten gebildet ist, wobei jeder Knoten dazu ausgelegt ist, Datenpakete von seinen Kindknoten zu empfangen und einige davon an seinen Elternknoten innerhalb der baumartigen Struktur zu übertragen, wobei vor der Übertragung eines Pakets durch einen Knoten jene einer Präambel erfolgt, die durch einen Zug von Elementarpräambeln gebildet ist, genannt Kurzpräambeln, wobei die Kommunikation jedes Knotens gemäß einer Sequenz von Zeitrastern organisiert ist, wobei jedes Zeitraster eine Hörphase (420) umfasst, auf die gegebenenfalls eine Empfangsphase (440) und/oder eine Übertragungsphase (450) folgt, **dadurch gekennzeichnet, dass** der Knoten:
- während der Hörphase bestimmt (620), ob ihm eine Präambel von einem seiner Kindknoten übertragen wird, und bejahendenfalls diesem Letztgenannten sofort eine Quittierungsnachricht zurückschickt (625), die eine Zeitinformation in relativer Form spezifiziert, genannt Treffzeitpunkt;
- am Ende der Hörphase, wenn wenigstens eine Quittierungsnachricht verschickt worden ist, in eine Empfangsphase (440) eintritt, in der er an dem Treffzeitpunkt eine Nachricht zur Zuweisung von Zeitfenstern sendet (810), wobei jede Zeitinformation in relativer Weise durch eine Anfangszeitinformation und eine Endzeitinformation definiert ist, und dann während jedes Zeitfensters ein Datenpaket von dem Kindknoten empfängt (820₁,... 820_{N}), dem dieses Fenster zugewiesen worden ist.

2. Kommunikationsverfahren nach Anspruch 1, **dadurch gekennzeichnet, dass** dann, wenn während der Hörphase keine Quittierungsnachricht verschickt worden ist, der Knoten bestimmt, ob Datenpakete in seinem Übertragungspuffer vorhanden sind, und:
- bejahendenfalls an seinen Elternknoten eine Präambel überträgt, die aus einem Zug von Kurzpräambeln gebildet ist;
- verneinendenfalls für den Rest des Zeitrasters einschläft.

3. Kommunikationsverfahren nach Anspruch 2, **dadurch gekennzeichnet, dass** der Knoten im Anschluss an die Übertragung jeder Kurzpräambel eine Quittierungsnachricht von seinem Elternknoten abwartet, und:
- wenn er eine solche Quittierungsnachricht empfängt, sofort die Übertragung des Zugs von Kurzpräambeln einstellt, aus dieser Quittierungsnachricht eine Zeitinformation extrahiert, die einen Treffzeitpunkt anzeigt, und bis zu diesem Zeitpunkt einschläft;
- wenn er am Ende des Zugs von Kurzpräambeln keine Quittierungsnachricht empfängt, bis zum Ende des Zeitrasters einschläft.

4. Kommunikationsverfahren nach Anspruch 3, **dadurch gekennzeichnet, dass** zum Treffzeitpunkt der Knoten eine von seinem Elternknoten ausgesandte Nachricht zur Zuweisung von Zeitfenstern erfasst und bestimmt, ob diese Nachricht seine eigene MAC-Adresse enthält, und:
- bejahendenfalls die Anfangsinformation sowie eine Zeitinformation über das Ende des ihm zugewiesenen Zeitfensters extrahiert, bis zum Anfang dieses Fensters einschläft und wenigstens ein in seinem Übertragungspuffer gespeichertes Datenpaket während dieses Fensters überträgt;
- verneinendenfalls bis zum Ende des Zeitrasters einschläft.

5. Kommunikationsverfahren nach Anspruch 4, **dadurch gekennzeichnet, dass** der Knoten am Ende des ihm zugewiesenen Zeitfensters bis zum Ende des Zeitrasters einschläft.

6. Kommunikationsverfahren nach Anspruch 1, **dadurch gekennzeichnet, dass** der Knoten am Ende der Empfangsphase überprüft, ob sein Elternknoten belegt ist, indem er erfasst, ob er ein von seinem Elternknoten stammendes Paket während der Hörphase empfangen hat, und:
- verneinendenfalls ihm einen Zug von Kurzpräambeln überträgt und eine Quittierungsnachricht von seinem Elternknoten abwartet;
- bejahendenfalls bis zum Ende des Zeitrasters einschläft.

7. Kommunikationsverfahren nach Anspruch 6, **dadurch gekennzeichnet, dass** dann, wenn der Knoten eine Quittierungsnachricht empfängt, er:
- die Übertragung des Zugs von Kurzpräambeln einstellt, aus dieser Quittierungsnachricht eine Zeitinformation extrahiert, die den Treffzeitpunkt anzeigt, und bis zu diesem Zeitpunkt einschläft;
- zum Treffzeitpunkt eine von seinem Elternknoten ausgesandte Nachricht zur Zuweisung von Zeitfenstern erfasst, bestimmt, ob diese Nachricht seine eigene MAC-Adresse enthält, und bejahendenfalls die Anfangsinformation sowie die Zeitinformation über das Ende des ihm zugewiesenen Zeitfensters extrahiert, bis zum Anfang dieses Fensters einschläft und an seinen Elternknoten wenigstens ein Datenpaket überträgt, das er von seinen Kindknoten während der vorhergehenden Empfangsphase empfangen hat.

8. Kommunikationsverfahren nach Anspruch 1, **dadurch gekennzeichnet, dass** die Zuweisung von Zeitfenstern an die verschiedenen Kindknoten auf Basis von Prioritätsgraden erfolgt, die in den Präambeln spezifiziert sind, welche jeweils von den verschiedenen Kindknoten ausgesandt sind.

9. Kommunikationsverfahren nach Anspruch 8, **dadurch gekennzeichnet, dass** der Prioritätsgrad ausgedrückt wird in Form des Typs der Dienstklasse, des wohl oder nicht mobilen Charakters eines Kindknotens, der Zahl von Paketen im Übertragungspuffer eines Kindknotens oder auch der Altersstufe des ältesten Pakets in diesem Übertragungspuffer.

10. Kommunikationsverfahren nach Anspruch 3, **dadurch gekennzeichnet, dass** die Zeitinformation, die den Treffzeitpunkt spezifiziert, ein Wert eines mit einer vorbestimmten Frequenz zu dekrementierenden Zählers ist.

11. Kommunikationsverfahren nach Anspruch 4, **dadurch gekennzeichnet, dass** die Anfangszeitinformation und die Endzeitinformation des dem Knoten zugewiesenen Zeitfensters Werte eines mit einer vorbestimmten Frequenz zu dekrementierenden Zählers sind.

12. Kommunikationsverfahren nach einem der Ansprüche 1 bis 11, **dadurch gekennzeichnet, dass** dann, wenn ein Knoten während der Hörphase eine Nachricht von seinem Elternknoten erfasst, er jede Übertragung beendet und bis zum Ende des aktuellen Zeitrasters einschläft.

13. Kommunikationsverfahren nach einem der Ansprüche 1 bis 11, **dadurch gekennzeichnet, dass** dann, wenn ein erster Knoten während der Hörphase eine Präambel erfasst, die durch einen zweiten Knoten ausgesandt ist, der den gleichen Elternknoten wie der erste Knoten hat, der erste Knoten ihm eine Präambel überträgt, ohne die Übertragungsphase abzuwarten, sofern Pakete in seinem Übertragungspuffer warten.

14. Kommunikationsverfahren nach einem der Ansprüche 1 bis 11, **dadurch gekennzeichnet, dass** dann, wenn ein Knoten während der Hörphase ein anderes Paket als eine Präambel erfasst, das von einem seiner Kindknoten stammt, er die Hörphase unterbricht und entweder bis zum Ende des aktuellen Zeitrasters einschläft oder direkt zur Übertragungsphase übergeht.

15. Kommunikationsverfahren nach einem der Ansprüche 1 bis 11, **dadurch gekennzeichnet, dass** dann, wenn ein Knoten während einer Übertragungsphase eine Präambel von seinem Elternknoten erfasst, während er von diesem gleichen Knoten eine Quittierungsnachricht erwartet, er bis zum Ende des aktuellen Zeitrasters einschläft.

16. Kommunikationsverfahren nach einem der Ansprüche 1 bis 11, **dadurch gekennzeichnet, dass** dann, wenn ein erster Knoten während einer Übertragungsphase eine Präambel erfasst, die von einem zweiten Knoten ausgesandt ist, welcher den gleichen Elternknoten wie der erste Knoten hat, der erste Knoten beschließt, die Übertragung seiner Präambel zu unterbrechen, wenn sein Prioritätsgrad niedriger ist als jener der vom zweiten Knoten ausgesandten Präambel, und im entgegengesetzten Fall die Übertragung seiner Präambel fortsetzt.

17. Kommunikationsverfahren nach einem der Ansprüche 1 bis 11, **dadurch gekennzeichnet, dass** dann, wenn ein Knoten während einer Empfangsphase oder einer Übertragungsphase eine Präambel oder eine Nachricht zur Zuweisung von Zeitfenstern erfasst, die von einem Kindknoten stammt, er nicht einschläft und die Übertragung eines Pakets von diesem Kindknoten abwartet.

## Claims

1. An asynchronous communication method for a wireless sensor network, the network further comprising at least one tree structure the nodes of which consist of said sensors and the root of which consists of a collecting node, each node being adapted to receive data packets of its child nodes and to transmit them, during an allocated time window, to its parent node within said tree structure, the transmission of a packet by a node being preceded by the transmission of a preamble consisting of a train of unit preambles, called short preambles, the communication of each node being organized according to a sequence of time frames, each time frame comprising a listening phase possibly followed by a receiving phase and/or a transmitting phase, **characterised in that** said node:
- determines during the listening phase whether a preamble is transmitted to it by one of its child nodes and, if yes, immediately sends backs to the same an acknowledgment message specifying a rendezvous time;
- at the end of the listening phase, if at least one acknowledgment message has been sent, enters a receiving phase wherein it broadcasts, at the rendezvous time, a message for allocating time windows to its child nodes, and then receives, during each time window, a data packet of the child node to which this window has been allocated.

2. The communication method according to claim 1, **characterised in that**, if no acknowledgment message has been sent during the listening phase, a node determines whether data packets are present in its transmitting buffer and:
- if yes, transmits a preamble consisting of a train of short preambles to its parent node;
- if no, goes to sleep for the rest of the time frame.

3. The communication method according to claim 2, **characterised in that**, after the transmission of each short preamble, the node waits for an acknowledgment message from its parent node and:
- if it receives such an acknowledgment message, immediately terminates the transmission of the train of short preambles, extracts from this acknowledgment message a time information indicating a rendezvous time and then goes to sleep until this time;
- if it does not receive any acknowledgment message at the end of the train of short preambles, goes to sleep until the end of the time frame.

4. The communication method according to claim 3, **characterised in that** at the rendezvous time, the node detects a time window allocation message originated from its parent node, determines whether this message contains its own MAC address and:
- if yes, extracts a start information and an end time information of its allocated time window, goes to sleep until the start of this window and transmits at least a data packet stored in its transmitting buffer during this window;
- if no, goes to sleep until the end of the time frame.

5. The communication method according to claim 4, **characterised in that**, at the end of is allocated time window, the node goes to sleep until the end of the time frame.

6. The communication method according to claim 1, **characterised in that** at the end of the receiving phase, the node checks whether its parent node is busy and:
- if no, transmits to it a train of short preambles and waits for an acknowledgment message from its parent node;
- if yes, goes to sleep until the end of the time frame.

7. The communication method according to claim 6, **characterised in that** if the node receives an acknowledgment message, the same:
- terminates the transmission of the train of short preambles, extracts from this acknowledgment message a time information indicating a rendezvous time and then goes to sleep until this instant;
- detects, at the rendezvous time, a message for allocating time windows originated from its parent node, determines whether this message contains its own MAC address and, if yes, extracts a start time information and an end time information of its allocated time window, goes to sleep until the start of this window and transmits to its parent node at least one data packet it has received from its child nodes during the previous receiving phase.

8. The communication method according to claim 1, **characterised in that** the time frame allocation at different child nodes is performed based on priority levels specified in preambles originated from its different child nodes respectively.

9. The communication method according to claim 9, **characterised in that** the priority level is expressed in terms of class of service type, whether a child node is mobile or not, number of packets in the transmitting buffer of a child node or even oldness of the oldest packet in this transmitting buffer.

10. The communication method according to claim 3, **characterised in that** the time information specifying the rendezvous time is a counter value to be decremented with a predetermined frequency.

11. The communication method according to claim 4, **characterised in that** the start time information and the end time information of the time window allocated to the node are counter values to be decremented with a predetermined frequency.

12. The communication method according to one of claims 1 to 11, **characterised in that**, when a node detects a message from its parent node during the listening phase, it terminates any transmission and goes to sleep until the end of the current time frame.

13. The communication method according to one of claims 1 to 11, **characterised in that**, when a first node detects, during the listening phase, a preamble originated from a second node having the same parent node as the first node, said first node itself transmits a preamble, without waiting for the transmitting phase, with the proviso that packets are in standby in its transmitting buffer.

14. The communication method according to one of claims 1 to 11, **characterised in that**, when a node detects, during the listening phase, a packet, other than a preamble, from one of its child nodes, it switches off the listening phase and either goes to sleep until the end of the current time frame, or directly switches to the transmitting phase.

15. The communication method according to one of claims 1 to 11, **characterised in that**, if a node detects, during a transmitting phase, a preamble of its parent node whereas it is waiting for an acknowledgment message from the same node, it goes to sleep until the end of the current time frame.

16. The communication method according to one of claims 1 to 11, **characterised in that**, if a first node detects, during a transmitting phase, a preamble originated from a second node having the same parent node as the first node, said first node decides to switch off the transmission of its preamble if its priority level is lower than that of the preamble originated from the second node and continues to transmit its preamble in the opposite case.

17. The communication method according to one of claims 1 to 11, **characterised in that**, if a node detects a preamble or a time window allocation message, from a child node, during a receiving or transmitting phase, it does not go to sleep and waits for the transmission of a packet of this child node.
